# EUROPÄISCHE PATENTSCHRIFT

(11) **EP 3 283 820 B1**
(45) Veröffentlichungstag und Bekanntmachung des Hinweises auf die Patenterteilung: **23.06.2021**
(21) Anmeldenummer: 16719283.0
(22) Anmeldetag: 14.04.2016
(51) Int. Cl.: F21V 8/00

(54) **OPTISCHES SYSTEM SOWIE ANORDNUNG ZUR LICHTABGABE**
OPTICAL SYSTEM, AND ASSEMBLY FOR EMITTING LIGHT
SYSTÈME OPTIQUE ET ENSEMBLE D'ÉMISSION DE LUMIÈRE

(30) Priorität: 16.04.2015 DE 202015101870 U
(43) Veröffentlichungstag der Anmeldung: 21.02.2018
(73) Patentinhaber: Zumtobel Lighting GmbH, 6850 Dornbirn (AT)
(72) Erfinder: MACHATE, Andreas, 88239 Wangen im Allgäu (DE)
(74) Vertreter: Thun, Clemens
(86) Internationale Anmeldenummer: PCT/EP2016/058207
(87) Internationale Veröffentlichungsnummer: WO 2016/166203

(56) Entgegenhaltungen:
- EP-A1- 1 110 030
- EP-A1- 1 306 610
- DE-A1-102012 215 640
- US-A1- 2004 012 946
- US-A1- 2005 254 771
- US-A1- 2005 270 798
- US-A1- 2006 126 142
- US-A1- 2007 279 933
- US-A1- 2011 013 417

## Beschreibung

Die Erfindung betrifft ein optisches System zur Beeinflussung eines von einer Lichtquelle abgestrahlten Lichts, sowie eine Anordnung zur Lichtabgabe mit einem solchen optischen System.

Aus der DE 10 2012 215 640 A1 ist ein Beleuchtungssystem mit einem im Wesentlichen plattenförmigen Lichtleiter und einer ebenfalls im Wesentlichen plattenförmigen Entblendungseinheit bekannt. Die Entblendungseinheit ist dabei parallel zu dem Lichtleiter und unterhalb von diesem angeordnet. Weiterhin umfasst das Beleuchtungssystem eine LED-Lichtquelle (LED: Licht emittierende Diode) zur Erzeugung eines Lichts, das von einer Seite her in den Lichtleiter einstrahlt. Auf der Unterseite des Lichtleiters sind nach unten vorstehende, beispielsweise quaderförmige Strukturen ausgebildet, über die das Licht den Lichtleiter verlässt. Auf der Oberseite der Entblendungseinheit sind kollimierende Elemente ausgebildet, die jeweils einer der Strukturen zugeordnet sind, so dass das Licht im Weiteren über diese kollimierenden Elemente in die Entblendungseinheit eintritt. Schließlich verlässt das Licht über die Unterseite der Entblendungseinheit das Beleuchtungssystem.

Die kollimierenden Elemente dienen zur Entblendung des Lichts. Hierzu sind sie etwa kegelartig geformt, mit einer kreisförmigen oder rechteckigen Grundfläche. An ihrer Oberseite weisen sie eine Ausnehmung auf, in die jeweils die zugehörige Struktur eingreifend angeordnet ist. Diese Gestaltung hat jedoch zur Folge, dass nur ein gewisser Anteil des Lichts die Lichtleiterplatte über die Strukturen verlässt. Ein nicht unerheblicher Anteil des Lichts hingegen wird durch den Lichtleiter an den Strukturen vorbei gelenkt, so dass er im Weiteren anderweitige Wechselwirkungen erfährt und in der Folge nicht über die Unterseite der Entblendungseinheit austritt. Hierdurch ist der Wirkungsgrad des Beleuchtungssystems deutlich limitiert. Außerdem erfordert insbesondere die Ausbildung der kollimierenden Elemente einen vergleichsweise hohen Herstellungsaufwand.

Aus der US 2005/0270798 A1 ist eine Folie zur Helligkeitsverstärkung bekannt. Die Folie umfasst eine Lichtleiterplatte in die seitlich Licht eingestrahlt wird. Parallel zu der Lichtleiterplatte sind mehrere längliche Linsen angeordnet, die zur Bündelung des Lichts dienen.

Aus der US 2004/0012946 A1 ist eine Lichtabgabeanordnung mit einer Lichtleiterplatte bekannt, in die über einen seitlichen Kantenbereich Licht eingestrahlt wird. Der seitliche Kantenbereich ist dabei dazu ausgestaltet, das Licht in der Ebene der Lichteiterplatte zu bündeln.

Aus der EP 1 110 030 A1 ist ein Beleuchtungssystem bekannt, insbesondere ein kantenbeleuchtetes System mit getrennten Komponenten zur Lichtextraktion und Lichtsteuerung. Dabei bewirkt eine lichtauskoppelnde Schicht eine Lichtextraktion der sich innerhalb und durch einen Wellenleiter ausbreitenden Lichtstrahlen senkrecht zur Einfallsrichtung d.h. senkrecht zur Ebene des Wellenleiters sowie eine lichtlenkende Schicht eine kontrollierte gerichtete Abstrahlung des Lichtes aus dem Gesamtsystem.

Die US 2006/ 126142 A1 zeigt ein Beleuchtungssystem für ein Anzeigegerät mit einer Lichtleiterplatte. Die Lichtleiterplatte weist hierbei auf zumindest einer Oberfläche eine Hologrammstruktur zur Lichtauskopplung des an einer Seitenfläche der Lichtleiterplatte eingekoppelten Lichts auf. Das Beleuchtungssystem weist zudem mindestens eine Punktlichtquelle zur Lichtabgabe auf, welche seitlich zur Lichtleiterplatte angeordnet ist.

Der Erfindung liegt die Aufgabe zugrunde, ein entsprechendes verbessertes optisches System bzw. eine entsprechende verbesserte Anordnung zur Lichtabgabe anzugeben; insbesondere soll dabei - bei einfacher Herstellungsmöglichkeit - ein besonders guter lichttechnischer Wirkungsgrad erzielbar sein.

Diese Aufgabe wird gemäß der Erfindung mit dem in dem unabhängigen Anspruch 1 genannten Gegenstand gelöst. Besondere Ausführungsarten der Erfindung sind in den abhängigen Ansprüchen angegeben.

Gemäß der Erfindung ist ein optisches System zur Beeinflussung eines von einer Lichtquelle abgestrahlten Lichts vorgesehen, das ein erstes optisches Element aufweist, das plattenförmig ist, so dass durch das erste optische Element eine Ebene festgelegt ist; dabei weist das erste optische Element einen, zum Eintritt des Lichts ausgebildeten seitlichen Kantenbereich auf. Weiterhin weist das System ein zweites optisches Element auf, das plattenförmig ist, wobei das zweite optische Element parallel zum ersten optischen Element angeordnet ist und einen Lichtaustrittsbereich zum Austritt des Lichts aufweist. Der seitliche Kantenbereich des ersten optischen Elements ist dabei dazu ausgestaltet, das Licht in der Ebene zu entblenden bzw. zu bündeln; das zweite optische Element weist wenigstens ein längliches Linsenelement auf, das sich entlang einer Längsachse erstreckt und das dazu ausgestaltet ist, das Licht in einer weiteren Ebene zu entblenden bzw. zu bündeln, die zumindest im Wesentlichen senkrecht zu der zuerst genannten Ebene orientiert ist.

Dabei weist das wenigstens eine längliche Linsenelement eine, sich parallel zur Längsachse erstreckende Nut auf, die zum Eintritt des Lichts ausgestaltet ist und die auf einer Seite des zweiten optischen Elements ausgebildet ist, die zum ersten optischen Element hin weist. Durch die Nut lässt sich ein besonders effektiver Übertritt des Lichts aus dem ersten optischen Element in das zweite optische Element erzielen.

Die vorliegende Erfindung ist dadurch gekennzeichnet, dass der seitliche Kantenbereich des ersten optischen Elements dazu ausgestaltet ist, das Licht in der Ebene E zu entblenden bzw. zu bündeln, wobei der Kantenbereich mehrere linsenartige Lichteintrittsbereiche aufweist, deren seitliche Begrenzungen in einer von der Lichtquelle fortweisenden Richtung divergierend gestaltet sind.

Dadurch, dass die Entblendung in der zuerst genannten Ebene bereits durch den seitlichen Kantenbereich des ersten optischen Elements bewirkt wird, muss das längliche Linsenelement lediglich zur Entblendung in der weiteren Ebene, also in lediglich einer Ebene ausgestaltet sein. Hierdurch ergeben sich Rahmenbedingungen, die insbesondere eine deutlich erleichterte Herstellung des Systems ermöglichen. Beispielsweise kann das Linsenelement profilförmig gestaltet werden.

Außerdem lässt sich durch die längliche Gestaltung des Linsenelements erzielen, dass das erste optische Element mit einem vergleichsweise großen Lichtaustrittsbereich gestaltet werden kann, über den das Licht aus dem ersten optischen Element austritt und im Weiteren über das wenigstens eine längliche Linsenelement in das zweite optische Element eintritt. Somit lässt sich auf diese Weise ein verbesserter Wirkungsgrad erzielen.

Vorzugsweise ist zwischen dem zweiten optischen Element und der Lichtquelle ein, parallel zu der Ebene E gemessener Abstand gebildet, der mindestens so groß ist wie die entsprechende Breite der Lichteintrittsbereiche.

Vorzugsweise erstreckt sich die Nut beidseits bis an den Rand des zweiten optischen Elements. Hierdurch lässt sich ein vergleichsweise großer

Lichtübertrittsbereich bewirken, so dass ein besonders hoher Wirkungsgrad erzielbar ist. Außerdem ist eine erleichterte Herstellung des Linsenelements möglich, wenn sich die Nut bis ganz an die beiden Endbereiche des Linsenelements erstreckt.

Vorzugsweise weist das wenigstens eine längliche Linsenelement - in einem Querschnitt normal zu der Längsachse betrachtet - divergierende Außenbegrenzungen auf. Durch diese Formgebung ist eine besonders effektive Bündelung des Lichts in der weiteren Ebene ermöglicht.

Erfindungsgemäß weist das erste optische Element wenigstens eine, parallel zu der Längsachse ausgerichtete längliche Struktur zum Austritt des Lichts auf. Aufgrund dieser Formgebung ist eine erleichterte Herstellung des ersten optischen Elements ermöglicht. Beispielsweise kann hierzu die längliche Struktur sich beidseits bis an den Rand des ersten optischen Elements erstreckend ausgebildet sein. Außerdem ist auf diese Weise ein vergleichsweise großer Lichtübertrittsbereich zwischen den beiden optischen Elementen ermöglicht.

Vorzugsweise ist die Gestaltung derart, dass sich - in einer normalen Projektion auf die Ebene betrachtet - die wenigstens eine längliche Struktur und das wenigstens eine längliche Linsenelement zumindest teilweise überlappen, vorzugsweise die längliche Struktur innerhalb der Projektion des wenigstens einen länglichen Linsenelements liegt. Auf diese Weise lässt sich, bei vorteilhafter Flächennutzung, ein besonders verlustarmer Lichtübertritt vom ersten auf das zweite optische Element erzielen.

Vorzugsweise ist die Gestaltung weiterhin derart, dass die längliche Struktur in die Nut eingreifend angeordnet ist. Weiterhin vorzugsweise ist dabei - in einem Querschnitt normal zu der Längsachse betrachtet - die Form der länglichen Struktur kongruent zu der Form der Nut. Auch dies ist vorteilhaft mit Bezug auf einen besonders effektiven Lichtübertritt. Beispielsweise kann hierzu - in einem Querschnitt normal zu der Längsachse betrachtet - die längliche Struktur eine Rechteckform aufweisen.

Vorzugsweise weist das zweite optische Element mehrere längliche Linsenelemente auf, die parallel zueinander angeordnet sind, vorzugsweise unmittelbar aneinandergrenzend. Hierdurch lässt sich eine besonders große Licht abgebende Fläche des zweiten optischen Elements bewirken.

Vorzugsweise weist dabei das erste optische Element mehrere längliche Strukturen zum Austritt des Lichts auf, die parallel zueinander angeordnet sind, wobei jedem der Linsenelemente genau eine der länglichen Strukturen zugeordnet ist. Auch dies ist vorteilhaft mit Bezug auf den Wirkungsgrad.

Gemäß einem weiteren Aspekt der Erfindung ist eine Anordnung zur Lichtabgabe vorgesehen, die eine Lichtquelle zur Erzeugung eines Lichts aufweist, sowie ein erfindungsgemäßes optisches System. Dabei ist die Anordnung derart gestaltet, dass das von der Lichtquelle erzeugte Licht von dem optischen System beeinflusst wird.

Vorzugsweise handelt es sich bei der die Lichtquelle um eine LED-Lichtquelle. Hierfür eignet sich das optische System besonders gut.

Vorzugsweise weist die Anordnung außerdem wenigstens eine weitere Lichtquelle auf, wobei die Gestaltung derart ist, dass durch die zuerst genannte Lichtquelle und die wenigstens eine weitere Lichtquelle das Licht von mehreren Seiten her in das erste optische Element eintritt. Auf diese Weise lässt sich besonders geeignet eine Lichtabgabe hoher Homogenität über das zweite optische Element bewirken.

Vorzugsweise weist die Anordnung weiterhin ein Reflektorelement auf, das mit Bezug auf das erste optische Element dem zweiten optischen Element gegenüberliegend angeordnet ist.

Die Erfindung wird im Folgenden anhand eines Ausführungsbeispiels und mit Bezug auf die Zeichnungen näher erläutert. Es zeigen:
- Fig. 1: eine Querschnitt-Skizze einer erfindungsgemäßen Anordnung zur Lichtabgabe,
- Fig. 2: eine Skizze einer Aufsicht auf einen Teil der Anordnung,
- Fig. 3: eine perspektivische Skizze eines Eckbereichs der Anordnung,
- Fig. 4: eine, der Fig. 3 entsprechende Skizze nach Art einer Explosionsdarstellung,
- Fig. 5: eine perspektivische Skizze eines größeren Bereichs der Anordnung,
- Fig. 6: ein Detail aus der Skizze der Fig. 5,
- Fig. 7: eine Skizze einer Aufsicht auf einen Teil des seitlichen Kantenbereichs des ersten optischen Elements,
- Fig. 8: eine Querschnitt-Skizze um einen Lichtübertrittsbereich zwischen den beiden optischen Elementen,
- Fig. 9: eine perspektivische Skizze der Anordnung und
- Fig. 10: eine perspektivische Skizze einer Variante der Anordnung nach Art einer Explosionsdarstellung.

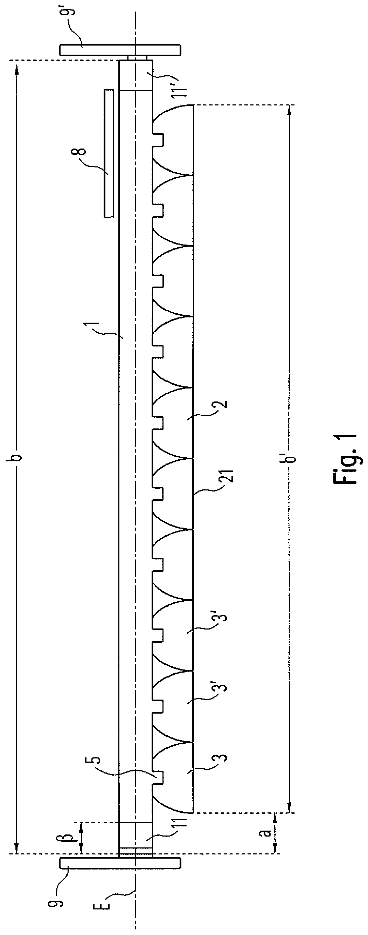

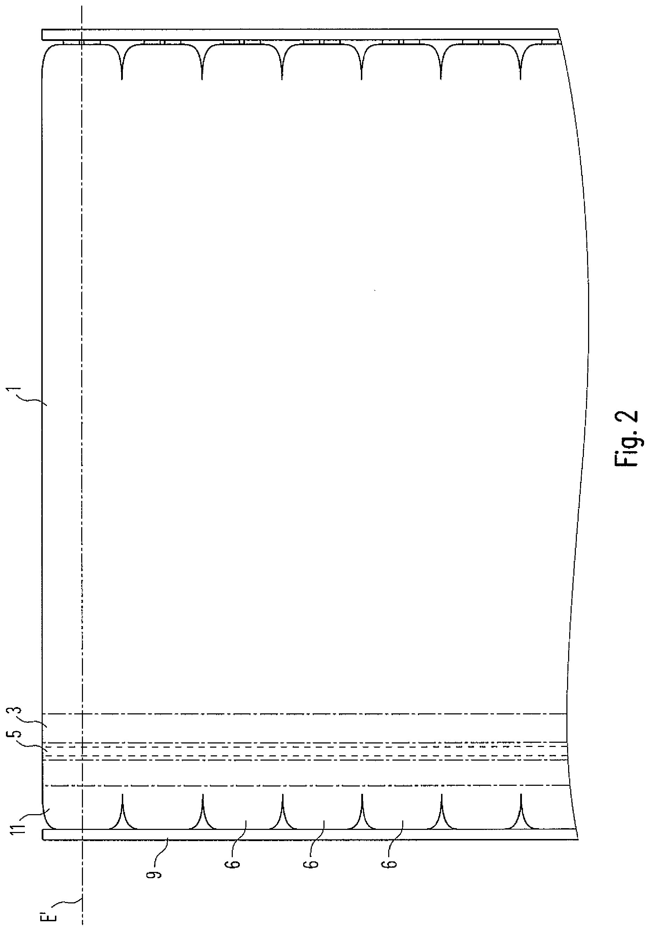

Fig. 1 zeigt eine Querschnitt-Skizze einer erfindungsgemäßen Anordnung zur Lichtabgabe, Fig. 2 eine Skizze einer Aufsicht auf einen Teil der Anordnung. Die Anordnung umfasst ein erfindungsgemäßes optisches System zur Beeinflussung eines von einer Lichtquelle 9 abgestrahlten Lichts. Die Lichtquelle 9 ist dabei Teil der erfindungsgemäßen Anordnung.

Das optische System umfasst ein erstes optisches Element 1, das in erster Näherung plattenförmig ist, so dass durch seine Plattenform eine Ebene E festgelegt ist. In dieser Beschreibung wird davon ausgegangen, dass das erste optische Element 1 horizontal ausgerichtet ist und dementsprechend auch die Ebene E horizontal orientiert ist. Im Allgemeinen kann jedoch zum Betrieb der Anordnung auch eine anderweitige Ausrichtung des ersten optischen Elements 1 gegenüber der Vertikalen vorgesehen sein. In diesem Fall sind die vorliegenden Richtungsangaben etc. entsprechend umzudeuten.

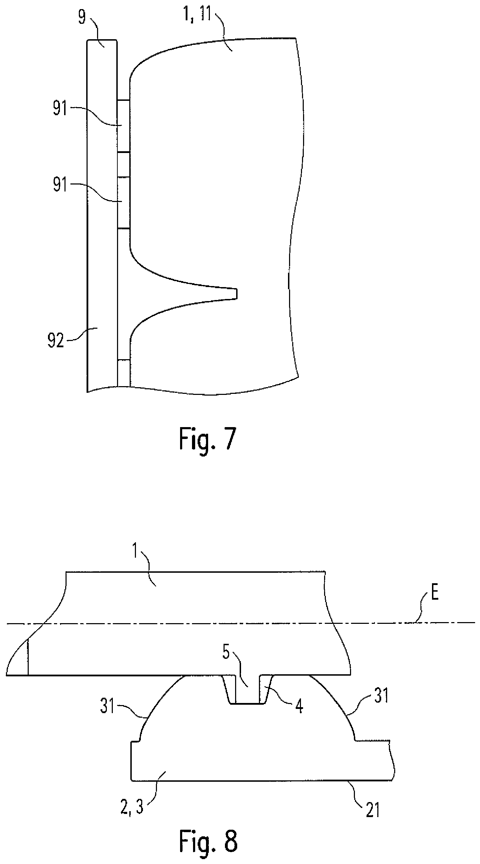

In Fig. 7 ist ein Ausschnitt aus der Skizze der Fig. 2 gezeigt. Im gezeigten Beispiel umfasst die Lichtquelle 9 mehrere, längs einer geradlinigen Reihe angeordnete LEDs 91, die vorzugsweise auf einer Platine 92 angeordnet sind. Dabei ist die Lichtquelle 9 so gestaltet und positioniert, dass die LEDs 91 in der Ebene E liegend bzw. die Ebene E durchsetzend angeordnet sind.

Das erste optische Element 1 besteht zumindest teilweise aus einem lichtdurchlässigen Material, beispielsweise herstellungstechnisch vorteilhaft aus einem Kunststoff. Das erste optische Element 1 weist einen seitlichen Kantenbereich 11 auf, der zum Eintritt des von der Lichtquelle 9 abgestrahlten Lichts ausgestaltet ist.

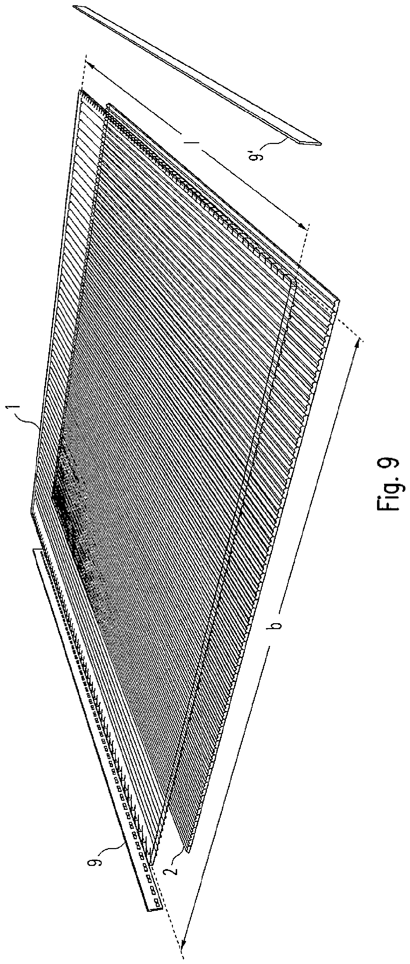

In Fig. 9 ist eine perspektivische Skizze der Anordnung nach Art einer Explosionsdarstellung gezeigt. Wie ersichtlich, kann das erste optische Element 1 in Aufsicht betrachtet in erster Näherung rechteckig geformt sein, so dass es vier Randseiten aufweist, wobei an einer dieser Randseiten der seitliche Kantenbereich 11 ausgebildet ist. Im gezeigten Beispiel weist das erste optische Element 1 dementsprechend eine Länge 1 und eine Breite b auf, wobei der Kantenbereich 11 an einer der beiden Längsseiten ausgebildet ist.

Vorzugweise erstreckt sich dabei die Platine 92 mit den LEDs 91 längs des Kantenbereichs 11.

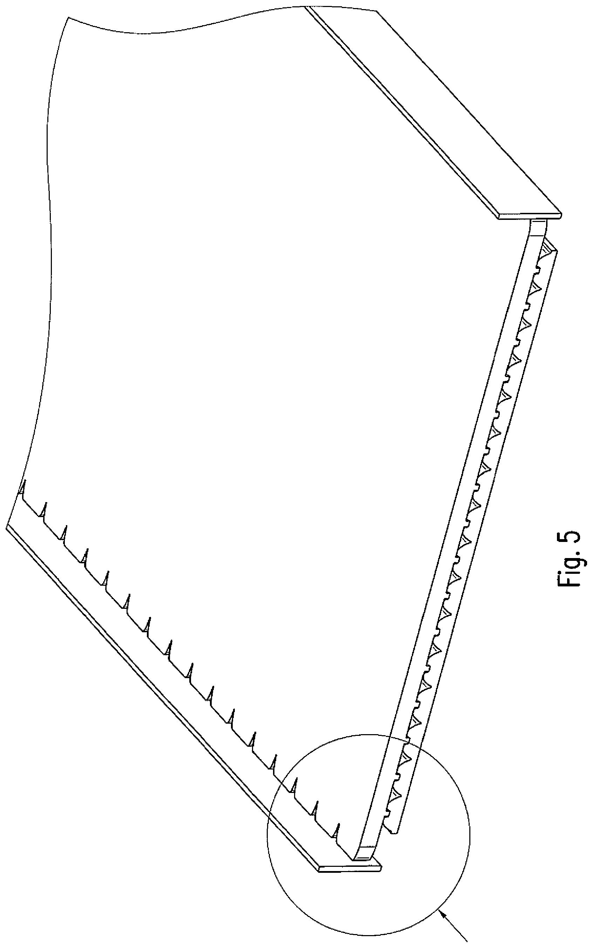

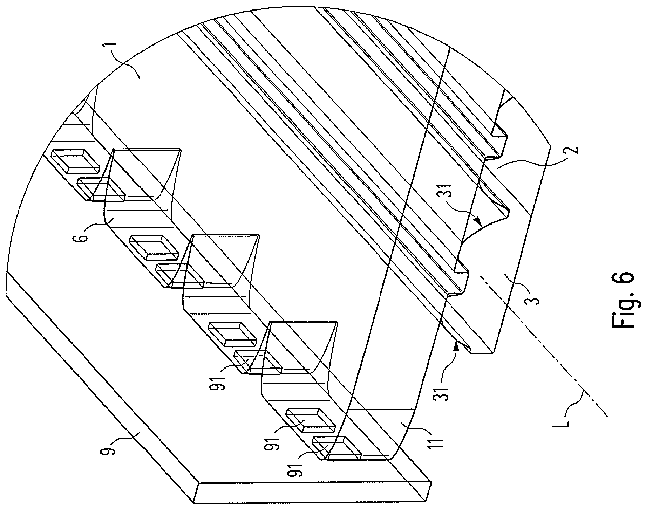

Fig. 5 zeigt eine perspektivische Skizze eines größeren Bereichs der Anordnung und Fig. 6 ein Detail aus der Skizze der Fig. 5. In Fig. 6 ist das erste optische Element 1 transparent skizziert.

Weiterhin umfasst das optische System ein zweites optisches Element 2, das ebenfalls in erster Näherung plattenförmig ist. Das zweite optische Element 2 besteht zumindest teilweise aus einem lichtdurchlässigen Material, beispielsweise herstellungstechnisch vorteilhaft aus einem Kunststoff.

Das zweite optische Element 2 ist dabei parallel zum ersten optischen Element 1 angeordnet, im gezeigten Beispiel unter dem ersten optischen Element 1. Das zweite optische Element 2 weist einen Lichtaustrittsbereich 21 zum Austritt des Lichts auf.

Der Lichtaustrittsbereich 21 ist vorzugsweise auf derjenigen der beiden großen Flächen die zweiten optischen Elements 2 ausgebildet, die dem ersten optischen Element 1 gegenüberliegt, hier also auf der nach unten weisenden Fläche des zweiten optischen Elements 2. Dabei ist die Gestaltung vorzugsweise derart, dass sich der Lichtaustrittsbereich 21 über den größten Teil dieser Fläche hinweg erstreckt bzw. durch diese Fläche gebildet ist.

Der Lichtaustrittsbereich 21 bzw. die nach unten weisende Fläche des zweiten optischen Elements 2 ist vorzugsweise plan gestaltet. Hierdurch ist sich eine besonders einfache Reinigung ermöglicht.

Das von der Lichtquelle 9 abgestrahlte Licht gelangt also zunächst in das erste optische Element 1 und dann von dort weiter in das zweite optische Element 2 und verlässt schließlich das optische System über den Lichtaustrittsbereich 21. Insoweit können die optischen Elemente 1, 2 auch als "Lichtleiter" angesehen werden.

Der seitliche Kantenbereich 11 des ersten optischen Elements 1 ist dazu ausgestaltet, das Licht in der Ebene E zu entblenden bzw. zu bündeln. Mit anderen Worten ist der Kantenbereich 11 so gestaltet, dass er den in der Ebene E liegenden Öffnungswinkel des von der Lichtquelle 9 abgestrahlten Lichts verkleinert. Hierzu kann der Kantenbereich 11 mehrere linsenartige Lichteintrittsbereiche 6 aufweisen, deren seitliche Begrenzungen in einer von der Lichtquelle 9 fortweisenden Richtung divergierend gestaltet sind, insbesondere in konvexer Form divergierend. Vorzugsweise sind die LEDs 91 sehr nahe an den Lichteintrittsbereichen 6 positioniert, so dass ein besonders großer Anteil des von den LEDs 91 abgegebenen Lichts über die Lichteintrittsbereiche 6 in das erste optische Element 1 eintritt.

Im gezeigten Beispiel sind die Lichteintrittsbereiche 6 herstellungstechnisch vorteilhaft so geformt, dass ihre Kontur in einer Richtung senkrecht zu der Ebene E unverändert ist.

Vorzugsweise ist die Gestaltung derart, dass jeweils eine LED 91 oder eine bestimmte Anzahl von LEDs 91 ihr Licht in jeweils einen der Linseneintrittsbereiche 6 einstrahlt. Im gezeigten Beispiel ist die Gestaltung derart, dass jeweils zwei benachbarte LEDs 91 Licht in einen der Lichteintrittsbereiche 6 abgeben.

Vorzugsweise sind die Lichteintrittsbereiche 6 so gestaltet, dass sie eine geradlinige Reihe bilden, vorzugsweise derart, dass sie jeweils unmittelbar aneinander grenzen. Insbesondere kann vorgesehen sein, dass sich die Lichteintrittsbereiche 6 über die gesamte Länge der betreffenden Randseite des ersten optischen Elements 1 hinweg erstrecken. So lässt sich ein besonders geeigneter Lichteintritt in das erste optische Element 1 bewirken.

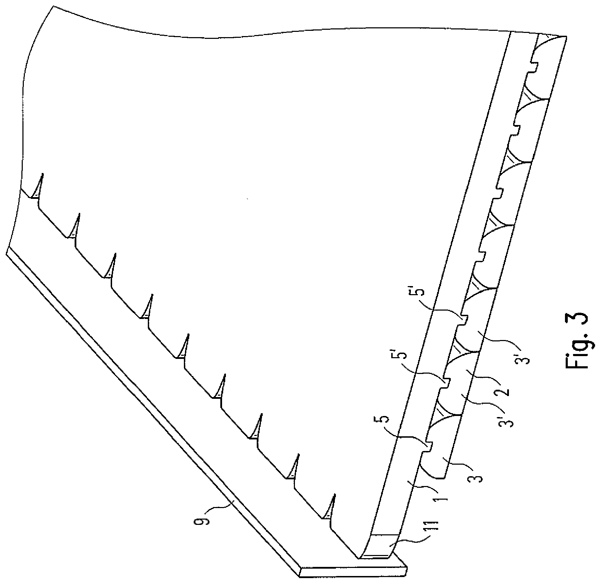

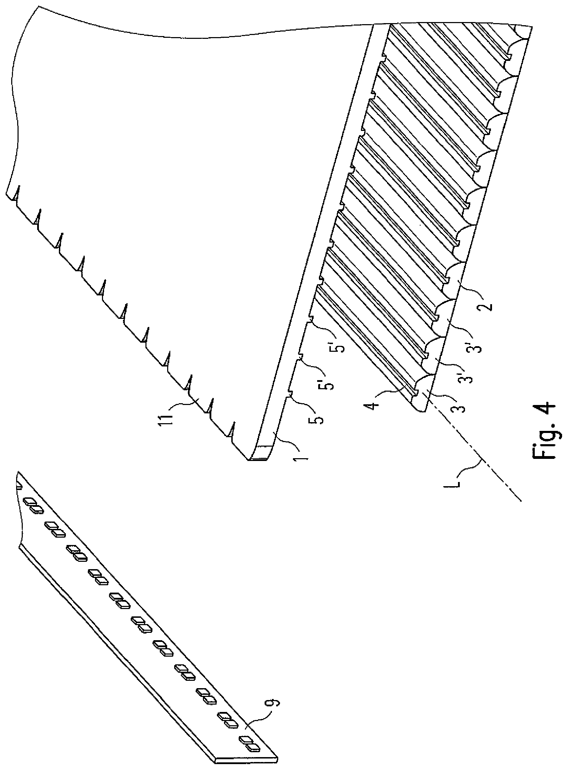

Fig. 3 zeigt eine perspektivische Skizze eines Eckbereichs der Anordnung, Fig. 4 eine entsprechende Skizze nach Art einer Explosionsdarstellung. Das zweite optische Element 2 weist ein längliches Linsenelement 3 auf, das sich entlang einer Längsachse L erstreckt und das dazu ausgestaltet ist, das Licht in einer - in Fig. 2 angedeuteten - weiteren ebene E' zu entblenden bzw. zu bündeln, die zumindest im Wesentlichen senkrecht zu der zuerst genannten Ebene E orientiert ist. Die weitere Ebene E' ist somit parallel zu der Zeichenebenen der Fig. 1 orientiert.

Durch diese Gestaltung lässt sich erzielen, dass das Licht, wenn es die Anordnung durch den Lichtaustrittsbereich 21 verlässt, in den beiden Ebenen E, E' gebündelt bzw. entblendet ist. Der Ausdruck "zumindest im Wesentlichen senkrecht" soll dabei insbesondere bedeuten, dass die beiden genannten Ebenen E, E' einen Winkel einschließen, der zwischen 80° und 90° beträgt. Dies ist beispielsweise besonders vorteilhaft, wenn die Anordnung als Lichtquelle für eine Leuchte, beispielsweise in Form einer Deckenleuchte oder Pendelleuchte verwendet wird.

Im gezeigten Beispiel erstreckt sich das Linsenelement 3 bzw. die Längsachse L parallel zu dem seitlichen Kantenbereich 11 bzw. parallel zu der Reihe der LEDs 91.

Erfindungsgemäß weist das Linsenelement 3 eine, sich parallel zur Längsachse L erstreckende Nut 4 auf, die zum Eintritt des Lichts ausgestaltet ist und die auf einer Seite des zweiten optischen Elements 2 ausgebildet ist, die zum ersten optischen Element 1 hin weist, hier also auf der Oberseite des Linsenelements 3.

Das erste optische Element 1 weist dabei erfindungsgemäß eine, parallel zu der Längsachse L ausgerichtete längliche Struktur 5 zum Austritt des Lichts auf. Herstellungstechnisch vorteilhaft kann die längliche Struktur 5 profilförmig gestaltet sein. Insbesondere kann die längliche Struktur 5 aus einem Stück mit dem restlichen ersten optischen Element 1 gestaltet ein.

Vorzugsweise ist die längliche Struktur 5 in die wenigstens eine Nut 4 eingreifend angeordnet. Hierdurch lässt sich ein besonders verlustarmer Übergang des Lichts aus dem ersten optischen Element 1 in das zweite optische Element 2 erzielen.

Eine besonders einfache Herstellung des zweiten optischen Elements 2 ist ermöglicht, wenn das Linsenelement 3 profilförmig gestaltet ist, so dass sich seine Profilachse parallel zu der Längsachse L erstreckt. Weiterhin vorteilhaft erstreckt sich dabei die Nut 4 über die gesamte Länge des Linsenelements 3. Dementsprechend ist auch die längliche Struktur 5 vorzugsweise zumindest ebenso lang, insbesondere genauso lang gestaltet wie die Nut 4.

In Fig. 8 ist ein Ausschnitt aus der Skizze der Fig. 1 vergrößert gezeigt. Dementsprechend ist hier das Linsenelement 3 in einem Querschnitt normal zu der Längsachse L gezeigt. Das Linsenelement 3 weist - in diesem Querschnitt betrachtet - in Richtung auf den Lichtaustrittsbereich 21 divergierende Außenbegrenzungen 31 auf, wobei die Außenbegrenzungen 31 insbesondere konkav geformt sein können. Hierdurch lässt sich eine besonders geeignete Bündelung des Lichts in der weiteren Ebene E' bewirken.

Vorzugsweise ist - im Querschnitt normal zur Längsachse L betrachtet - die Form der länglichen Struktur 5 zumindest näherungsweise kongruent zu der Form der Nut 4. Beispielsweise kann die Struktur 5, wie in Fig. 8 angedeutet, einen rechteckigen Querschnitt aufweisen. Die Nut kann 4 dementsprechend ebenfalls einen rechteckigen Querschnitt aufweisen oder - wie skizziert - einen trapezförmigen, was vorteilhaft ist mit Bezug auf die Positionierung der Struktur 5 in der Nut 4. Grundsätzlich sind hier jedoch auch andere Querschnittformen möglich, wie beispielsweise Halbkreise oder dergleichen.

Vorzugsweise entspricht die Erstreckung des zweiten optischen Elements 2 parallel zu der Längsachse L betrachtet der Längserstreckung des Linsenelements 4. In diesem Fall erstreckt sich die Nut 4 vorteilhaft beidseits bis an den Rand des zweiten optischen Elements 2.

Wie in Fig. 2 mit unterbrochenen Linien angedeutet, ist die Gestaltung weiterhin vorzugsweise derart, dass sich - in einer normalen Projektion auf die Ebene E betrachtet - die längliche Struktur 5 und das längliche Linsenelement 3 zumindest teilweise überlappen, insbesondere so, dass die längliche Struktur 5 innerhalb der Projektion des wenigstens einen länglichen Linsenelements 3 liegt. Hierdurch lässt sich, bei besonders guter Flächennutzung, ein besonders geeigneter Lichtübertritt aus dem ersten optischen Element 1 in das zweite optische Element 2 bewirken.

Das zweite optische Element 2 weist vorzugsweise mehrere parallel zueinander und analog, insbesondere baugleich ausgebildete Linsenelemente 3, 3' auf und das erste optische Element 1 weist vorzugsweise mehrere parallel zueinander und analog, insbesondere baugleich ausgebildete längliche Strukturen 5, 5', wobei jeweils eines der Linsenelemente 3, 3' wie oben beschrieben mit genau einem der länglichen Strukturen 5, 5' zusammenwirkend gestaltet ist. Dementsprechend ist weiterhin vorzugsweise die Gestaltung derart, dass die Anzahl der Linsenelemente 3, 3' gleich groß ist wie die Anzahl der länglichen Strukturen 5, 5'.

Durch die beschriebene eingreifende Anordnung der länglichen Strukturen 5, 5' in die Nuten 4 der Linsenelemente 3, 3' lässt sich ein sehr effizienter Lichtübertritt erzielen. Idealerweise kann also quasi das gesamte Licht, das über die Strukturen 5, 5' das erste optische Element 1 verlässt, über die Nuten 4 in das zweite optische Element 2 eintreten.

Vorzugsweise kann das zweite optische Element 2 aus den Linsenelementen 3, 3' bestehen.

Wie im gezeigten Beispiel der Fall, sind die Linsenelemente 3, 3' derart gestaltet, dass durch deren Flächen, die den Nuten 4 gegenüberliegen, der Lichtaustrittsbereich 21 gebildet ist. So lässt sich der Lichtaustrittsbereich 21 insbesondere besonders großflächig und zusammenhängend gestalten.

Gemäß der Skizze aus Fig. 1 weist das zweite optische Element 2 zehn Linsenelemente 3, 3' auf. Bei der in Fig. 9 gezeigten Ausführung sind es deutlich mehr. Grundsätzlich kann die Anzahl der Linsenelemente 3 frei gewählt sein. Analoges gilt mit Bezug auf die Anzahl der Lichteintrittsbereiche 2 des seitlichen Kantenbereichs 11 des ersten optischen Elements 1. Insoweit sollen die Skizzen der Figuren 1 und 2 dazu dienen, das Prinzip des optischen Systems zu verdeutlichen.

Wie in Fig. 1 angedeutet, ist die Gestaltung weiterhin vorzugsweise derart, dass sich im Querschnitt normal zu der Längsachse L betrachtet das erste optische Element 1 näher an die Lichtquelle 9 heran erstreckt als das zweite optische Element 2. Beispielsweise kann vorgesehen sein, dass zwischen dem zweiten optischen Element 2 und der Lichtquelle 9 ein, parallel zu der Ebene E gemessener Abstand a gebildet ist, der beispielsweise mindestens so groß ist wie die entsprechende Breite β des Kantenbereichs 11 bzw. der Lichteintrittsbereiche 6. Beispielsweise kann vorgesehen sein, dass hierbei die folgende Relation gilt: β < a < 5 β.

Durch diese Ausgestaltung lässt sich erzielen, dass sich das Licht der LEDs 91 jedenfalls in einem gewissen Maß vermischt, bevor es in eine der länglichen Strukturen 5, 5' eintritt. Hierdurch lässt sich eine entsprechend vorteilhafte gleichmäßige Durchmischung des LED-Lichts erzielen. Dies ist beispielsweise besonders relevant, wenn sich das Licht von denjenigen der LEDs 91, die ihr Licht in einen der Lichteintrittsbereiche 6 einstrahlen, untereinander unterscheidet, beispielsweise mit Bezug auf die Farbe oder die Farbtemperatur des Lichts. Beispielsweise kann vorgesehen sein, dass jeweils zwei benachbarte LEDs 91 ihr Licht in einen der Lichteintrittsbereiche 6 einstrahlen, wobei eine der beiden LEDs 91 ein kaltweißes Licht abstrahlt und die andere LED 91 ein warmweißes Licht. Durch eine entsprechende Ansteuerung der LEDs 91 lässt sich auf diese Weise vorteilhaft eine Einstellbarkeit der Farbtemperatur des von der Anordnung abgegebenen Lichts realisieren.

Die länglichen Strukturen 5, 5' sind vorzugsweise so gestaltet, dass sie sich - normal zu der Längsachse L betrachtet - an beiden Seiten vergleichsweise nahe bis an den Rand des ersten optischen Elements 1 hin erstrecken. Dies ist vorteilhaft mit Bezug auf die Ausbildung eines besonders großen Lichtaustrittsbereichs 21. Beispielsweise kann vorgesehen sein, dass so betrachtet die beiden randseitigen Strukturen 5, 5' vom entsprechenden Rand des ersten optischen Elements 1 jeweils einen Abstand aufweisen, der kleiner ist als das Dreifache der Breite β des Kantenbereichs 11, vorzugsweise kleiner als das Doppelte der Breite β des Kantenbereichs 11.

Wie beispielsweise in den Figuren 1 oder 9 skizziert, weist die Anordnung vorzugsweise weiterhin eine weitere Lichtquelle 9' auf, die mit Bezug auf das erste optische Element 1 der zuerst genannten Lichtquelle 9 gegenüberliegend angeordnet ist, wobei die Gestaltung mit Bezug auf die Einstrahlung des Lichts in das erste optische Element 1 analog gestaltet ist. Dementsprechend weist das erste optische Element 1 in diesem Fall vorzugsweise einen entsprechenden, analog zu dem zuerst genannten Kantenbereich 11 gebildeten, weiteren Kantenbereich 11' auf, der dem zuerst genannten Kantenbereich 11 gegenüberliegt und zur Bündelung bzw. Entblendung des von der weiteren Lichtquelle 9' abgegebenen Lichts in der Ebene E dient.

Wie in Fig. 1 angedeutet, hat dementsprechend das zweite optische Element 2 vorzugsweise eine Breite b', die etwas kleiner ist als die Breite b des ersten optischen Elements 1.

Alternativ kann beispielsweise vorgesehen sein, dass die Anordnung auf einer der Lichtquelle 9 gegenüberliegenden Seite des ersten optischen Elements 1 ein Reflektorelement aufweist, das dazu dient, das dort auftreffende Licht zurück zu reflektieren; hierdurch lässt sich der Wirkungsgrad erhöhen.

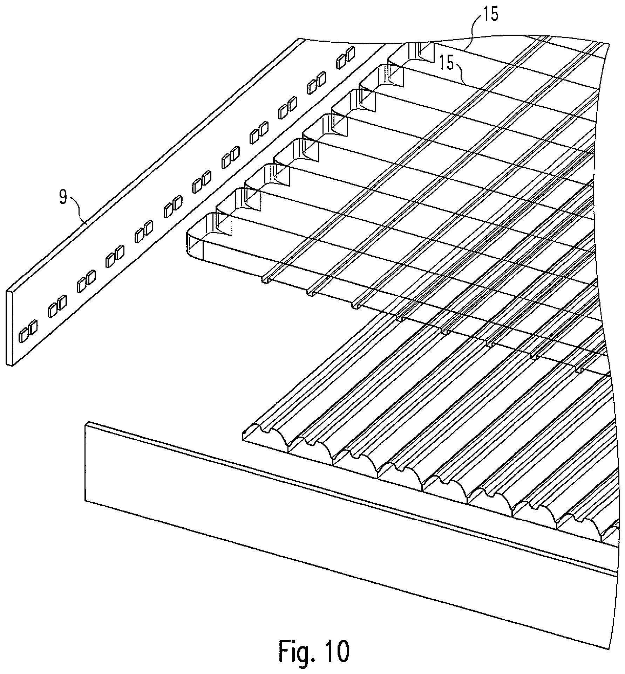

Wie in Fig. 10 teilweise angedeutet, kann im Allgemeinen auch vorgesehen sein, dass die Anordnung vier entsprechende Lichtquellen aufweist, die jeweils an einer der vier Randseiten des ersten optischen Elements 1 angeordnet sind. Bei der skizzierten Variante weist das erste optische Element 1 weiterhin Linienstrukturen 15 zur Diffuslichterzeugung auf; die Linienstrukturen 15 sind hierzu vorzugsweise parallel zueinander und senkrecht zur Längsachse L ausgebildet. Beispielsweise können die Linienstrukturen 15, wie aus Fig. 10 hervorgeht, so ausgebildet sein, dass sie sich jeweils bis an eine der Grenzen zwischen zwei benachbarten Lichteintrittsbereichen 6 erstrecken.

Wie beispielsweise aus Fig. 4 hervorgeht, kann die Lichtquelle 9 so gestaltet sein, dass die LEDs 91 in einem sich wiederholenden Muster angeordnet sind. Grundsätzlich kann jedoch auch eine ungleichmäßige Anordnung der LEDs 91 vorgesehen sein, beispielsweise derart, dass Abstände zwischen den LEDs 91 zu den beiden Begrenzungen der Platine 92 hin größer werden. Die kann vorteilhaft mit Bezug auf eine möglichst gleichmäßige Lichtverteilung im ersten optischen Element 1 sein, beispielsweise im oben erwähnten Fall der vier-seitigen Lichteinstrahlung in das erste optische Element 1.

In den entsprechenden Figuren sind die länglichen Strukturen 5, 5' des ersten optischen Elements 1 als Elemente skizziert, die von der Unterseite des ersten optischen Elements 1 hervorstehen. Dies ist vorteilhaft mit Bezug auf die beschriebene hohe Effizienz des Lichtübertritts. Allerdings kann alternativ vorgesehen sein, dass anstelle entsprechender vorstehender Elemente lediglich die entsprechenden Bereiche der Unterseite des ersten optischen Elements 1 aufgeraut gestaltet sind, so dass hier das Licht aus dem ersten optischen Element 1 heraus treten kann und im Weiteren in das zweite optische Element 2 eintreten kann. Hierbei ist jedoch zu beachten, dass im Allgemeinen eine entsprechend raue Oberfläche der Bündelung des Lichts in der Ebene E etwas entgegenwirkt. Auch aus dieser Sicht sind die dargestellten hervortretenden Strukturen 5, 5' im Allgemeinen vorteilhafter.

Wie beispielsweise aus Fig. 1 hervorgeht, kann vorgesehen sein, dass die Linsenelemente 3 alle baugleich ausgeführt sind und dabei mit gleichmäßigen gegenseitigen Abständen angeordnet sind, beispielsweise jeweils unmittelbar aneinander grenzend.

Im Allgemeinen kann jedoch auch vorgesehen sein, dass die Linsenelemente 3 nicht gleichmäßig angeordnet sind, sondern beispielsweise derart, dass sie - im Querschnitt normal zu der Längsachse L betrachtet - in einer Richtung auf die Lichtquelle 9 zu mit abnehmender Dichte angeordnet sind. Dies kann vorteilhaft mit Bezug auf eine gleichmäßige Lichtabgabe der Anordnung sein.

Eine ähnliche Wirkung lässt sich auch dadurch erzielen, dass die Linsenelemente 3 unterschiedlich groß gestaltet sind, als beispielsweise - im Querschnitt normal zu der Längsachse L betrachtet - in einer Richtung auf die Lichtquelle 9 zu mit abnehmender Größe.

Analoges ergibt sich in diesem Sinn dementsprechend auch für die länglichen Strukturen 5, 5' des ersten optischen Elements 1. Mit anderen Worten kann deren Größe bzw. Dichte in Richtung auf die Lichtquelle 9 zu abnehmend gestaltet sein.

Wie im rechten Bereich der Skizze der Fig. 1 angedeutet, kann die Anordnung weiterhin ein Reflektorelement 8, beispielsweise in Form einer hochreflektierenden Folie, aufweisen, das mit Bezug auf das erste optische Element 1 dem zweiten optischen Element 2 gegenüberliegend angeordnet ist, hier also auf der Oberseite des ersten optischen Elements 1. Dies ist im Allgemeinen vorteilhaft mit Bezug auf den Wirkungsgrad.

Allerdings ist das Reflektorelement 9 lediglich optional. Beispielsweise kann vorgesehen sein, dass die Anordnung derart aufgebaut ist, dass sich oberhalb und unterhalb der beiden optischen Elemente 1, 2 kein weiteres Bauteil der Anordnung befindet, zumindest ober- und unterhalb eines mittigen Bereichs der beiden optischen Elemente 1,2. Wenn die Anordnung gemäß dieser Ausführung bei einer Pendelleuchte verwendet wird, lässt sich erzielen, dass eine Durchsicht durch die beiden optischen Elemente 1, 2 von unten auf die darüber liegende Decke ermöglicht ist.

Mit der beschriebenen Gestaltung lässt sich insbesondere ein Lichtaustrittsbereich 21 erzielen, der bei gegebener Breite des Systems eine besonders große Fläche aufweist. Dabei eignet sich das System bzw. die Anordnung auch im Fall einer insgesamt vergleichsweise geringen Breite. Aber auch ein insgesamt vergleichsweise großer Lichtaustrittsbereich 21 lässt sich geeignet realisieren.

Ein weiterer Vorteil der erfindungsgemäßen Ausgestaltung liegt darin, dass die beiden optischen Elemente 1, 2 verhältnismäßig einfach hergestellt werden können. Beispielsweise kann das erste optische Element 1 und/oder das zweite optische Element 2 aus Kunststoff bestehen.

Die beiden optischen Elemente 1, 2 müssen für die vorgesehene Funktionsweise lediglich aufeinander gelegt werden. Es ist keine darüber hinausgehende mechanische Verbindung erforderlich, also beispielsweise kein Verkleben oder dergleichen.

Zudem ist durch die Plattenform der beiden optischen Elemente 1, 2 eine insgesamt sehr geringe Bauhöhe des optischen Systems und somit auch der Anordnung insgesamt erzielbar.

Dadurch, dass die länglichen Strukturen 5, 5' und die Linsenelemente 3, 3' parallel zueinander gestaltet sind, ergibt sich auf dem Lichtaustrittsbereich 21 kein Moiré-Effekt.

Die Anordnung eignet sich besonders zur Verwendung bei einer Leuchte, beispielsweise bei einer Pendelleuchte, einer Anbauleuchte oder einer Einbauleuchte. Dabei ist es nicht erforderlich für die Anordnung noch eine Abdeckung oder eine Folie oder dergleichen vorzusehen.

## Patentansprüche

1. Optisches System zur Beeinflussung eines von einer Lichtquelle (9) abgestrahlten Lichts, aufweisend
- ein erstes optisches Element (1), das plattenförmig ist, so dass durch das erste optische Element (1) eine Ebene (E) festgelegt ist,
wobei das erste optische Element (1) einen, zum Eintritt des Lichts ausgebildeten seitlichen Kantenbereich (11) aufweist,
- ein zweites optisches Element (2), das plattenförmig ist, wobei das zweite optische Element (2) parallel zum ersten optischen Element (1) angeordnet ist und einen Lichtaustrittsbereich (21) zum Austritt des Lichts aufweist, wobei das zweite optische Element (2) wenigstens ein längliches Linsenelement (3) aufweist, das sich entlang einer Längsachse (L) erstreckt und das dazu ausgestaltet ist, das Licht in einer weiteren Ebene (E') zu entblenden bzw. zu bündeln, die zumindest im Wesentlichen senkrecht zu der zuerst genannten Ebene (E) orientiert ist,
wobei das wenigstens eine längliche Linsenelement (3) eine, sich parallel zur Längsachse (L) erstreckende Nut (4) aufweist, die zum Eintritt des Lichts ausgestaltet ist und die auf einer Seite des zweiten optischen Elements (2) ausgebildet ist, die zum ersten optischen Element (1) hin weist,
und wobei das erste optische Element (1) wenigstens eine, parallel zu der Längsachse (L) ausgerichtete längliche Struktur (5) zum Austritt des Lichts aufweist,
**dadurch gekennzeichnet,**
**dass** der seitliche Kantenbereich (11) des ersten optischen Elements (1) dazu ausgestaltet ist, das Licht in der Ebene (E) zu entblenden bzw. zu bündeln, wobei der Kantenbereich (11) mehrere linsenartige Lichteintrittsbereiche (6) aufweist, deren seitliche Begrenzungen in einer von der Lichtquelle (9) fortweisenden Richtung divergierend gestaltet sind.

2. Optisches System nach Anspruch 1,
bei dem das erste optische Element (1) eine Breite (b) und das zweite optische Element (2) eine Breite (b') aufweist,
wobei die Breite (b') des zweiten optischen Elements (2) kleiner ist als die Breite (b) des ersten optischen Elements (1).

3. Optisches System nach einem der vorhergehenden Ansprüche,
bei dem sich die Nut (4) beidseits bis an den Rand des zweiten optischen Elements (2) erstreckt.

4. Optisches System nach einem der vorhergehenden Ansprüche,
bei der das wenigstens eine längliche Linsenelement (3) - in einem Querschnitt normal zu der Längsachse (L) betrachtet - in Richtung auf den Lichtaustrittsbereich (21) divergierende Außenbegrenzungen (31) aufweist.

5. Optisches System nach einem der vorhergehenden Ansprüche,
das derart gestaltet ist, dass sich - in einer normalen Projektion auf die Ebene (E) betrachtet - die wenigstens eine längliche Struktur (5) und das wenigstens eine längliche Linsenelement (3) zumindest teilweise überlappen, vorzugsweise die längliche Struktur (5) innerhalb der Projektion des wenigstens einen länglichen Linsenelements (3) liegt.

6. Optisches System nach einem der vorherigen Ansprüche,
das derart gestaltet ist, dass die längliche Struktur (5) in die Nut (4) eingreifend angeordnet ist.

7. Optisches System nach Anspruch 6,
bei dem - in einem Querschnitt normal zu der Längsachse (L) betrachtet - die Form der länglichen Struktur (5) kongruent zu der Form der Nut (4) ist.

8. Optisches System nach Anspruch 6 oder 7,
bei dem - in einem Querschnitt normal zu der Längsachse (L) betrachtet - die längliche Struktur eine Rechteckform aufweist.

9. Optisches System nach einem der vorhergehenden Ansprüche,
bei dem das zweite optische Element (2) mehrere längliche Linsenelemente (3, 3') aufweist, die parallel zueinander angeordnet sind und vorzugsweise unmittelbar aneinandergrenzend.

10. Optisches System nach Anspruch 9,
bei dem das erste optische Element mehrere längliche Strukturen (5, 5') zum Austritt des Lichts aufweist, die parallel zueinander angeordnet sind, wobei jedem der Linsenelemente (3, 3') genau eine der länglichen Strukturen (5, 5') zugeordnet ist.

11. Optisches System nach einem der vorhergehenden Ansprüche,
bei dem das erste optische Element (1) Linienstrukturen (15) zur Diffuslichterzeugung aufweist,
wobei die Linienstrukturen (15) vorzugsweise parallel zueinander und senkrecht zur Längsachse (L) ausgebildet sind,
und wobei weiterhin bevorzugt die Linienstrukturen (15) sich jeweils bis an eine der Grenzen zwischen zwei benachbarten Lichteintrittsbereichen (6) erstrecken.

12. Anordnung zur Lichtabgabe, aufweisend
- eine Lichtquelle (9) zur Erzeugung eines Lichts und
- ein optisches System nach einem der vorhergehenden Ansprüche, wobei die Anordnung derart ist, dass das von der Lichtquelle (9) erzeugte Licht von dem optischen System beeinflusst wird.

13. Anordnung zur Lichtabgabe nach Anspruch 12,
bei der die Lichtquelle (9) eine LED-Lichtquelle ist,
wobei die Lichtquelle (9) mehrere, längs einer geradlinigen Reihe angeordnete LEDs (91), die vorzugsweise auf einer Platine (92) angeordnet sind, umfasst, und wobei jeweils zwei benachbarte LEDs (91) Licht in einen der Lichteintrittsbereiche (6) des optischen Systems abgeben.

14. Anordnung zur Lichtabgabe nach Anspruch 13,
wobei jeweils das von zwei benachbarte LEDs (91) abgegebene Licht sich untereinander unterscheidet, insbesondere mit Bezug auf die Farbe oder die Farbtemperatur des Lichts.

15. Anordnung zur Lichtabgabe nach einem der Ansprüche 12 bis 14, weiterhin aufweisend
- wenigstens eine weitere Lichtquelle (9'), wobei die Gestaltung derart ist, dass durch die Lichtquellen (9, 9') das Licht von mehreren Seiten her in das erste optische Element (1) eintritt.

16. Anordnung zur Lichtabgabe nach einem der Ansprüche 12 bis 15, weiterhin aufweisend
- ein Reflektorelement (8), das mit Bezug auf das erste optische Element (1) dem zweiten optischen Element (2) gegenüberliegend angeordnet ist.

## Claims

1. Optical system for influencing a light emitted by a light source (9), comprising
- a first optical element (1) which is plate-shaped, so that the first optical element (1) defines a plane (E),
wherein the first optical element (1) comprises a lateral edge region (11) configured for entry of the light,
- a second optical element (2), which is plate-shaped, wherein the second optical element (2) is disposed parallel to the first optical element (1) and comprises a light exit region (21) for exit of the light,
wherein the second optical element (2) comprises at least one elongated lens element (3), which extends along a longitudinal axis (L) and is configured to suppress glare or focus the light in a further plane (E') which is oriented at least substantially perpendicular to the first-mentioned plane (E), wherein the at least one elongated lens element (3) comprises a groove (4) which extends parallel to the longitudinal axis (L) and is configured for entry of the light and is formed on a side of the second optical element (2) facing the first optical element (1),
and wherein the first optical element (1) comprises at least one elongated structure (5) aligned parallel to the longitudinal axis (L) for exit of the light,
**characterized in that**
the lateral edge region (11) of the first optical element (1) is configured to suppress glare or focus the light in the plane (E), wherein the edge region (11) comprises a plurality of lens-like light entry regions (6), the lateral boundaries of which are configured such that they diverge in a direction away from the light source (9).

2. Optical system according to Claim 1,
in which the first optical element (1) has a width (b) and the second optical element (2) has a width (b'),
wherein the width (b') of the second optical element (2) is smaller than the width (b) of the first optical element (1).

3. Optical system according to any one of the preceding claims, in which the groove (4) extends on both sides to the edge of the second optical element (2).

4. Optical system according to any one of the preceding claims, in which, viewed in a cross-section normal to the longitudinal axis (L), the at least one elongated lens element (3) comprises outer boundaries (31) which diverge in the direction toward the light exit region (21) .

5. Optical system according to any one of the preceding claims, which is designed such that, viewed in a normal projection onto the plane (E), the at least one elongated structure (5) and the at least one elongated lens element (3) overlap at least partly; the elongated structure (5) is preferably inside the projection of the at least one elongated lens element (3) .

6. Optical system according to any one of the preceding claims, which is designed such that the elongated structure (5) is disposed to engage in the groove (4).

7. Optical system according to Claim 6,
in which, viewed in a cross section normal to the longitudinal axis (L), the shape of the elongated structure (5) is congruent to the shape of the groove (4).

8. Optical system according to Claim 6 or 7,
in which, viewed in a cross section normal to the longitudinal axis (L), the elongated structure has a rectangular shape.

9. Optical system according to any one of the preceding claims, in which the second optical element (2) comprises a plurality of elongated lens elements (3, 3') which are disposed parallel to one another and preferably directly adjacent to one another.

10. Optical system according to Claim 9,
in which the first optical element comprises a plurality of elongated structures (5, 5') for exit of the light which are disposed parallel to one another, wherein each one of the lens elements (3, 3') is associated with exactly one of the elongated structures (5, 5').

11. Optical system according to any one of the preceding claims, in which the first optical element (1) comprises line structures (15) for generating diffused light,
wherein the line structures (15) are preferably configured parallel to one another and perpendicular to the longitudinal axis (L),
and wherein further preferably the line structures (15) respectively extend to one of the boundaries between two adjacent light entry regions (6).

12. Arrangement for emitting light, comprising
- a light source (9) for producing a light, and
- an optical system according to any one of the preceding claims,
wherein the arrangement is such that the light produced by the light source (9) is influenced by the optical system.

13. Arrangement for emitting light according to Claim 12,
in which the light source (9) of the lamp is an LED light source,
wherein the light source (9) comprises a plurality of LEDs (91) which are disposed along a straight line and are preferably disposed on a circuit board (92), and wherein two respective adjacent LEDs (91) emit light into one of the light entry regions (6) of the optical system.

14. Arrangement for emitting light according to Claim 13,
wherein the light respectively emitted by two adjacent LEDs (91) differs from another, in particular with respect to the color or the color temperature of the light.

15. Arrangement for emitting light according to any one of Claims 12 to 14, further comprising
- at least one further light source (9'), wherein the design is such that the light enters the first optical element (1) from multiple sides via the light sources (9, 9').

16. Arrangement for emitting light according to any one of Claims 12 to 15, further comprising
- a reflector element (8) which is disposed opposite to the second optical element (2) with respect to the first optical element (1).

## Revendications

1. Système optique destiné à influencer une lumière émise par une source lumineuse (9), présentant
- un premier élément optique (1) en forme de plaque, de telle sorte que le premier élément optique (1) détermine un plan (E),
ledit premier élément optique (1) présentant une zone de bordure latérale (11) destinée à faire entrer la lumière,
- un second élément optique (2) en forme de plaque, ledit second élément optique (2) étant disposé parallèlement au premier élément optique (1) et présentant une zone de sortie de lumière (21) destinée à faire sortir la lumière,
ledit second élément optique (2) présentant au moins un élément lentille longitudinal (3) qui s'étend le long d'un axe longitudinal (L) et qui est conçu pour protéger contre l'éblouissement de la lumière dans un autre plan (E') qui est orienté au moins sensiblement perpendiculairement au plan (E) cité en premier ou pour focaliser la lumière,
l'au moins un élément lentille longitudinal (3) présentant une rainure (4) s'étendant parallèlement à l'axe longitudinal (L), qui est conçue pour faire entrer la lumière et qui est formée sur un côté du second élément optique (2) qui fait face au premier élément optique (1),
et ledit premier élément optique (1) présentant au moins une structure longitudinale (5) orientée parallèlement à l'axe longitudinal (L) et destinée à faire sortir la lumière, **caractérisé en ce que**
la zone de bordure latérale (11) du premier élément optique (1) est conçue pour protéger contre l'éblouissement de la lumière dans le plan (E) ou pour focaliser la lumière, ladite zone de bordure (11) présentant plusieurs zones d'entrée de lumière (6) de type lentille dont les limites latérales sont disposées de manière divergente dans une direction opposée à la source lumineuse (9).

2. Système optique selon la revendication 1,
dans lequel le premier élément optique (1) présente une largeur (b) et le second élément optique (2) présente une largeur (b'),
ladite largeur (b') du second élément optique (2) étant inférieure à la largeur (b) du premier élément optique (1).

3. Système optique selon l'une des revendications précédentes, dans lequel la rainure (4) s'étend des deux côtés jusqu'au bord du second élément optique (2).

4. Système optique selon l'une des revendications précédentes, dans lequel l'au moins un élément lentille longitudinal (3), vu en coupe transversale normale par rapport à l'axe longitudinal (L), présente des limites extérieures (31) divergeant en direction de la zone de sortie de lumière (21).

5. Système optique selon l'une des revendications précédentes, conçu de telle manière que, vue dans une projection normale sur le plan (E) , l'au moins une structure longitudinale (5) et l'au moins un élément lentille longitudinal (3) se chevauchent au moins partiellement, la structure longitudinale (5) se situe de préférence à l'intérieur de la projection de l'au moins un élément lentille longitudinal (3).

6. Système optique selon l'une des revendications précédentes, conçu de telle manière que la structure longitudinale (5) est disposée emboîtée dans la rainure (4).

7. Système optique selon la revendication 6,
dans lequel, vue en coupe transversale normale par rapport à l'axe longitudinal (L), la forme de la structure longitudinale (5) est conforme à la forme de la rainure (4).

8. Système optique selon la revendication 6 ou 7,
dans lequel, vue en coupe transversale normale par rapport à l'axe longitudinal (L), la structure longitudinale présente une forme rectangulaire.

9. Système optique selon l'une des revendications précédentes, dans lequel le second élément optique (2) présente plusieurs éléments lentille longitudinaux (3, 3') disposés en parallèle entre eux et qui se jouxtent de préférence directement.

10. Système optique selon la revendication 9,
dans lequel le premier élément optique présente plusieurs structures longitudinales (5, 5') destinées à faire sortir la lumière, disposées parallèles entre elles, et dans lequel à chacun des éléments lentille (3, 3') est associée une structure longitudinale (5, 5') respective.

11. Système optique selon l'une des revendications précédentes, dans lequel le premier élément optique (1) présente des structures linéaires (15) destinées à produire de la lumière diffuse,
lesdites structures linéaires (15) étant conçues de préférence parallèles les unes aux autres et perpendiculaires à l'axe longitudinal (L),
et lesdites structures linéaires (15) s'étendant en outre de manière privilégiée jusqu'à l'une des limites entre deux zones d'entrée de lumière (6) voisines.

12. Ensemble émetteur de lumière, présentant
- une source lumineuse (9) destinée à générer une lumière et
- un système optique selon l'une des revendications précédentes,
ledit ensemble étant conçu de telle sorte que la lumière générée par la source lumineuse (9) est influencée par le système optique.

13. Ensemble d'émission de lumière selon la revendication 12, dans lequel la source lumineuse (9) est une source lumineuse à DEL,
ladite source lumineuse (9) comprenant plusieurs DEL (91) qui sont disposées en rangée rectiligne et sont de préférence agencées sur une platine (92), deux DEL (91) voisines respectives émettant de la lumière vers l'une des zones d'entrée de lumière (6) du système optique.

14. Ensemble d'émission de lumière selon la revendication 13, dans lequel la lumière respectivement émise par chacune des deux DEL (91) voisines est différente de l'autre, en particulier en ce qui concerne la couleur ou la température de couleur de la lumière.

15. Ensemble d'émission de lumière selon l'une des revendications 12 à 14, présentant en outre
- au moins une autre source lumineuse (9'), la conception étant telle que, grâce aux sources lumineuses (9, 9'), la lumière pénètre dans le premier élément optique (1) à partir de plusieurs côtés.

16. Ensemble d'émission de lumière selon l'une des revendications 12 à 15, présentant en outre
- un élément réflecteur (8) disposé à l'opposé du second élément optique (2) par rapport au premier élément optique (1).
